# EUROPEAN PATENT SPECIFICATION

(11) **EP 3 540 387 B1**
(45) Date of publication and mention of the grant of the patent: **22.02.2023**
(21) Application number: 16920976.4
(22) Date of filing: 11.11.2016
(51) Int. Cl.: G01G 19/52, A47C 7/62, B60N 2/40, G01L 1/20

(54) **LOAD DETECTION SENSOR AND LOAD DETECTION SENSOR UNIT**
LASTDETEKTIONSSENSOR UND LASTDETEKTIONSSENSOREINHEIT
CAPTEUR DE DÉTECTION DE CHARGE ET ENSEMBLE CAPTEUR DE DÉTECTION DE CHARGE

(43) Date of publication of application: 18.09.2019
(73) Proprietor: Fujikura Ltd., Tokyo 135-8512 (JP)
(72) Inventor: KAMESHIMA ,Takashi, Sakura-shi Chiba 285-8550 (JP)
(74) Representative: Grünecker Patent- und Rechtsanwälte PartG mbB
(86) International application number: PCT/JP2016/083488
(87) International publication number: WO 2018/087874

(56) References cited:
- WO-A1-2014/148521
- WO-A1-2015/119211
- WO-A1-2016/121835
- WO-A1-2016/121835
- JP-A- H08 266 030
- JP-A- 2006 509 337
- JP-A- 2007 132 888
- JP-A- 2012 121 363
- JP-A- 2012 121 363
- JP-A- 2013 216 277

## Description

### Technical Field

The present invention relates to a load detection sensor and a load detection sensor unit, and is preferably used to appropriately detect seating.

### Background Art

An alarm system that warns unwearing of a seat belt during riding in a vehicle has been put to practical use as one of safety systems in vehicles. In this alarm system, a warning is issued when wearing of a seat belt is not detected in a state where seating of a person has been detected. A seating detection device that detects a load by seating may be used as the device that detects the seating of a person.

There is known a seating detection device that uses a load detection sensor having a configuration in which a spacer having an opening is disposed between two resin films, and electrodes formed on the respective films face each other with a predetermined distance therebetween inside the opening of the spacer (e.g., Patent Literature 1). Also known are seating detection devices comprising a metal plate on top of the uppermost resin film in order to obtain a stabilizing effect in view of variations in environmental temperatures, either with a pressing member for pressing the metal plate (e.g., Patent Literature 2) or without a pressing member (e.g., Patent Literature 3).

[Patent Literature 1] JPH09-315199 A
[Patent Literature 2] WO 2016/121835 A1
[Patent Literature 3] JP 2012 121363 A

### Summary of Invention

However, typically, when the temperature rises, a resin film is prone to bend with a weak force due to a reduction in the strength. Thus, under an environment with high temperature like the inside of a cabin of an automobile under a blazing sun, the strength of a resin film may be reduced. In this case, when a load smaller than a usual human load is applied to a seat device, the load may be erroneously detected as seating.

In view of the above, it is an object of the present invention to provide a load detection sensor and a load detection sensor unit that are capable of appropriately detecting a load applied in response to seating.

In order to solve the above problems, a load detection sensor of the present invention is provided as defined in claim 1.

In the load detection sensor as describe above, when the metal plate is pressed, the metal plate is bent, and the second insulating sheet of the sensor sheet is also bent following the bending of the metal plate. Accordingly, a state of the first electrode and the second electrode which are disposed in the part overlapping the metal plate changes to turn on the load detection sensor, and a load is detected. Metal is less prone to creep than resin. Thus, the metal plate is less prone to have a pressing impression than the second insulating sheet made of resin. Thus, it is possible to prevent erroneous load detection caused by a pressing impression.

Resin tends to more easily deform according to the environment temperature than metal. In the load detection sensor unit, the thickness of the second insulating sheet of the sensor sheet is less than the thickness of the metal plate. Thus, it is possible to reduce a deformation amount of the second insulating sheet made of resin compared to the case where the thickness of the second insulating sheet is equal to or larger than the thickness of the meatal plate. That is, the above aspect is close to the case where only the metal plate is provided without the second insulating sheet. Thus, it is possible to reduce variations in a load (ON load) applied to the load detection sensor at the point when the load detection sensor is turned on, the variations being caused by temperature changes. As a result, it is possible to prevent erroneous load detection caused by temperature changes.

In this manner, according to the load detection sensor of the present invention, it is possible to appropriately detect a load.

The load detection sensor further includes an adhesive layer that is disposed between the second insulating sheet and the metal plate and bonds the second insulating sheet and the metal plate together, and a total thickness of the thickness of the second insulating sheet and a thickness of the adhesive layer is less than the thickness of the metal plate.

The second insulating sheet and the metal plate are bonded together with the adhesive layer. Thus, when pressing to the metal plate is released, and the metal plate returns to a position in an unpressed state, the metal plate can return the second insulating sheet to the position. Thus, even when an environmental temperature around the load detection sensor changes, the second insulating sheet is less prone to have a pressing impression. In addition, since the total thickness of the thickness of the second insulating sheet and the thickness of the adhesive layer is less than the thickness of the metal plate, it is possible to more reliably prevent erroneous load detection caused by temperature changes.

Preferably, the thickness of the adhesive layer is equal to or larger than 10 µm and 0.8 times or less the thickness of the second insulating sheet.

It is known that the adhesive layer is cured and the elastic modulus thereof becomes extremely high under a low-temperature environment. In order to further stabilize the ON load of the load detection sensor under the low-temperature environment, the elastic modulus of the adhesive layer may be important. When the thickness of the adhesive layer is 0.8 times or less the thickness of the second insulating sheet, the elastic modulus of the adhesive layer increases to approximately 20% of the elastic modulus of the second insulating sheet under the low-temperature environment. Thus, it is possible to further stabilize the ON load. Further, when the thickness of the adhesive layer is equal to or larger than 10 µm, it is possible to prevent a reduction in the ON load, the reduction being caused by an excessive pressing force applied to the adhesive layer under a high-temperature environment, which causes the adhesive layer to laterally flow to reduce the thickness of the adhesive layer to a certain thickness or less, and prevent the electrodes from constantly making contact with each other due to a loss of adhesiveness.

Preferably, the thickness of the second insulating sheet is within a range of 10% to 75% of the thickness of the metal plate.

When the thickness of the second insulating sheet is within such a range, it is possible to prevent erroneous load detection caused by temperature changes while ensuring the durability of the second insulating sheet.

Preferably, the thickness of the second insulating sheet is less than a thickness of the first insulating sheet.

In such a case, it is possible to prevent erroneous load detection caused by temperature changes while further reducing the thickness of the load detection sensor.

Preferably, the load detection sensor further includes a spacer disposed between the first insulating sheet and the second insulating sheet, and an elastic modulus of the spacer under a temperature environment of 85°C is equal to or higher than 10 MPa.

In the load detection sensor including such a spacer, although the ON load increases with an increase of the elastic modulus of the spacer, an increasing rate of the ON load decreases from 10 MPa of the elastic modulus. Further, typically, resin tends to become hard at a low temperature. Thus, when the elastic modulus of the spacer under a temperature environment of 85°C is equal to or higher than 10 MPa, the elastic modulus of the spacer becomes equal to or higher than 10 MPa even under a temperature environment of lower than 85°C. Thus, the deformation of the spacer is small from low temperature through high temperature, and a change in the thickness is also small. Thus, it is possible to prevent erroneous load detection caused by the change.

Preferably, the load detection sensor further includes a spacer including an insulating sheet disposed between the first insulating sheet and the second insulating sheet, a first adhesive layer that bonds the insulating sheet and the first insulating sheet together, and a second adhesive layer that bonds the insulating sheet and the second insulating sheet together, and an elastic modulus of the first adhesive layer and an elastic modulus of the second adhesive layer under a temperature environment of 85°C are equal to or higher than 10 MPa.

In the load detection sensor including such a spacer, although the ON load increases with an increase of the elastic modulus of the first adhesive layer and the elastic modulus of the second adhesive layer of the spacer, an increasing rate of the ON load decreases from 10 MPa of the elastic modulus. Further, typically, resin tends to become hard at a low temperature. Thus, when the elastic modulus of the first adhesive layer and the elastic modulus of the second adhesive layer under a temperature environment of 85°C are equal to or higher than 10 MPa, the elastic modulus of the spacer becomes equal to or higher than 10 MPa even under a temperature environment of lower than 85°C. Thus, the deformation of the spacer is small from low temperature through high temperature, and a change in the thickness is also small. Thus, it is possible to prevent erroneous load detection caused by the change.

A load detection sensor unit of the present invention includes: the load detection sensor according to any one of the above aspects; and a pressing member disposed on the metal plate at a side opposite to the sensor sheet, the pressing member including a pressing part that presses the metal plate.

Since the metal plate is pressed by the pressing part, it is possible to appropriately bend the metal plate and appropriately detect seating compared to the case where the metal plate is directly pressed by the seat cushion. Further, metal is less prone to creep than resin. Thus, the metal plate is less prone to have a pressing impression even when the metal plate is pressed by the pressing part. Thus, in the load detection sensor unit, it is possible to prevent erroneous detection of a load applied in response to seating, the erroneous detection being caused by a pressing impression. As a result, it is possible to appropriately detect a load in response to seating.

Preferably, the pressing member includes a top wall that receives pressing from a seat cushion, the top wall having an area larger than a contact area of the pressing part with the metal plate.

Since the area of the top wall which receives pressing from the seat cushion is larger than the contact area of the pressing part with the metal plate, the pressing force from the seat cushion can be concentrated on the pressing part by the top wall, and the metal plate can be more appropriately bent. Thus, it is possible to more appropriately detect load.

Preferably, the top wall has an area larger than the first electrode and the second electrode, and the pressing part has an area smaller than the first electrode and the second electrode.

Since the top wall has an area larger than the first electrode and the second electrode, the top wall can receive a larger load than the first electrode and the second electrode. Further, since the pressing part has an area smaller than the first electrode and the second electrode, it is possible to transmit the pressing force concentrated by the top wall of the pressing member on the pressing part to the first electrode and the second electrode without distributing the concentrated pressing force.

As described above, the present invention provides the load detection sensor unit capable of appropriately detecting a load applied in response to seating.

### Brief Description of Drawings

FIG. 1 is an exploded view illustrating the configuration of a load detection sensor unit in an embodiment of the present invention.
FIG. 2 is a sectional view of the load detection sensor unit attached to zigzag springs.
FIG. 3 is a diagram illustrating a pressing member in a view different from FIG. 1.
FIG. 4 is an exploded view of a load detection sensor.
FIG. 5 is a sectional view of the load detection sensor which includes a spacer including a plurality of layers.
FIG. 6 is a diagram illustrating an ON state of the load detection sensor.
FIG. 7 is a table showing a result of an experiment in which a load is applied under different temperature environments when the thickness of a second insulating sheet is less than the thickness of a metal plate in the load detection sensor and when the thickness of the second insulating sheet is equal to the thickness of the metal plate.
FIG. 8 is a graph showing numerical values of the experiment result of FIG. 6.
FIG. 9 is a graph illustrating the relationship between a second adhesive layer and an ON load.
FIG. 10 is a graph showing a result of an experiment in which a pressing part whose tip has a planar shape presses the load detection sensor.
FIG. 11 is a diagram illustrating a load detection sensor unit including a pressing part whose tip has a projecting curved surface shape in the same view as FIG. 2.
FIG. 12 is a graph illustrating a result of an experiment in which the pressing part whose tip has a projecting curved surface shape presses the load detection sensor.

### Description of Embodiments

Hereinbelow, a preferred embodiment of a load detection sensor and a load detection sensor unit according to the present invention will be described in detail with reference to the drawings. In order to facilitate understanding, a scale of each of the drawings may differ from a scale in the following description.

### (1) Embodiment

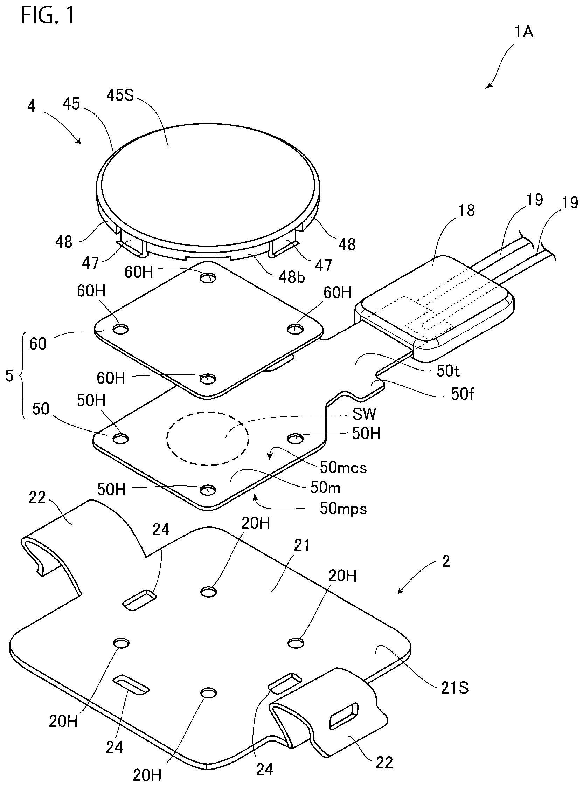

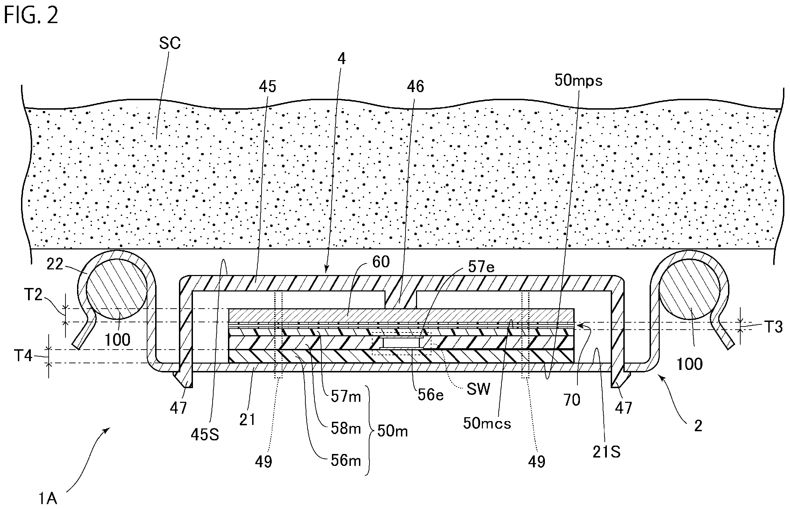

FIG. 1 is an exploded view illustrating the configuration of a load detection sensor unit of the present embodiment. FIG. 2 is a sectional view of the load detection sensor unit attached to zigzag springs of a seat device. FIG. 2 is a sectional view of the load detection sensor unit in a plane along the right-left direction of the seat device. As illustrated in FIGS. 1 and 2, the load detection sensor unit 1A includes, as principal elements, a base 2, a pressing member 4, and a load detection sensor 5.

The load detection sensor 5 includes a sensor sheet 50 which has flexibility and includes a switch SW including a first electrode 56e and a second electrode 57e, a metal plate 60, and an adhesive layer 70 which bonds the sensor sheet 50 and the metal plate 60 together. The sensor sheet 50 and the metal plate 60 are bonded together with the adhesive layer 70.

The sensor sheet 50 is a sheet-like membrane switch, and includes a main block 50m which has a substantially rectangular shape and a tail block 50t which is connected to the main block 50m and narrower than the main block 50m. The main block 50m is provided with the switch SW which includes the first electrode 56e and the second electrode 57e. A wing part 50f, which is wide, is formed on the tail block 50t. A through hole 50H is formed near each corner of the main block 50m.

As illustrated in FIG. 2, the metal plate 60 is bonded to one face of the sensor sheet 50 with the adhesive layer 70. In the present embodiment, the metal plate 60 is bonded to a cushion side face 50mcs of the main block 50m which is a part of the sensor sheet 50. The cushion side face 50mcs is a face located at the side corresponding to a seat cushion SC of the seat device. The cushion side face 50mcs includes a region overlapping the first electrode 56e and the second electrode 57e of the sensor sheet 50 in a direction perpendicular to the cushion side face 50mcs. The metal plate 60 is bonded onto the cushion side face 50mcs including the region. That is, in front view of the cushion side face 50mcs, the first electrode 56e and the second electrode 57e are located inside a range surrounded by the side face of the metal plate 60 in a direction perpendicular to the thickness direction of the metal plate 60.

The adhesive layer 70 is a layer-like member that bonds the sensor sheet 50 and the metal plate 60 together. The adhesive layer 70 may be entirely or partially disposed between the sensor sheet 50 and the metal plate 60. When the adhesive layer 70 is partially disposed between the sensor sheet 50 and the metal plate 60, the adhesive layer 70 is disposed at least in a region overlapping a pressing part 46 of the pressing member 4 (described below) in the thickness direction of the adhesive layer 70. Preferably, the adhesive layer 70 is disposed also in a region overlapping the first electrode 56e and the second electrode 57e in the thickness direction of the adhesive layer 70. In the present embodiment, the adhesive layer 70 has a size substantially equal to the size of the metal plate 60. A material of the adhesive layer 70 may be any material that is capable of bonding the sensor sheet 50 and the metal plate 60 together. Examples of the material of the adhesive layer 70 include a thermoplastic resin, a thermosetting resin, and a photo-curable resin. Further, the adhesive layer 70 may be one including a base material such as polyethylene terephthalate (PET) or a nonwoven fabric and adhesive layers which are formed on both faces of the base material. Preferably, a glass transition temperature Tg of the adhesive layer 70 is equal to or higher than 85°C. When the glass transition temperature Tg is equal to or higher than 85°C, the adhesive layer 70 is not apt to flow even under an environment with high temperature like the inside of a cabin of an automobile under a blazing sun. Thus, it is possible to prevent erroneous seating detection caused by flowing of the adhesive layer 70.

The base 2 includes a mounting part 21 on which the load detection sensor 5 is mounted and a pair of hook parts 22 which is coupled to the mounting part 21. An upper face of the mounting part 21 serves as a mounting face 21S. The main block 50m is disposed on the mounting face 21S. As illustrated in FIG. 2, in the main block 50m, an entire base-facing face 50mps which faces the mounting face 21S of the mounting part 21 is not bonded to the mounting part 21. The mounting face 21S and the base-facing face 50mps abut on each other. The mounting part 21 includes a plurality of through holes 20H (FIG. 1) each of which penetrates from the mounting face 21S to a lower face (the face opposite to the mounting face 21S) of the mounting part 21 and a plurality of hook openings 24 (FIG. 1).

The pair of the hook parts 22, which are paired, are disposed at positions that are opposed to each other across the mounting part 21. A plurality of zigzag springs 100 are stretched side by side in an opening of a frame of the seat device of a vehicle (FIG. 2), and the hook parts 22 are fitted onto adjacent two of the zigzag springs 100. Thus, each of the hook parts 22 serves as a locking part which locks the base 2 to the zigzag spring 100. In the present embodiment, the pair of the hook parts 22 are arranged side by side in the lateral direction of the seat device and fitted onto a pair of the zigzag springs 100 which are adjacent to each other in the lateral direction. In a state where the pair of the hook parts 22 are fitted onto a pair of the adjacent zigzag springs 100 in this manner, the mounting part 21 is located under the seat cushion SC (FIG. 2) which is mounted on a pair of the zigzag springs 100, and the mounting part 21 is disposed between the adjacent paired zigzag springs 100 when the zigzag springs are viewed from above. As described above, in the present embodiment, in a state where the pair of the hook parts 22 are fitted onto the adjacent paired zigzag springs 100, the mounting face 21S is located below the lower end of each of the zigzag springs 100. Further, in the present embodiment, the base 2 is obtained by shaping a metal plate, and the thickness of the base 2 in this case is, for example, 0.8 mm.

The pressing member 4 is a member that covers the main block 50m which is mounted on the mounting face 21S of the mounting part 21 to protect the first electrode 56e and the second electrode 57e of the main block 50m. As illustrated in FIG. 2, the pressing member 4 also serves as a pressing member that presses the switch SW of the load detection sensor 5, the switch SW including the first electrode 56e and the second electrode 57e, by being pressed by the seat cushion SC.

The pressing member 4 includes a top wall 45 and a frame wall 48. The top wall 45 is a plate-like member having a substantially circular shape. The frame wall 48 of the pressing member 4 is divided into a plurality of parts and connected to the outer periphery of the top wall 45. Hook pieces 47 are connected to the top wall 45 between the divided parts of the frame wall 48. The hook pieces 47 are fitted into the respective hook openings 24 which are formed on the mounting part 21 of the base 2. A relative movement between the base 2 and the pressing member 4 in the direction of the mounting face 21S is restricted by fitting the hook pieces 47 into the respective hook openings 24.

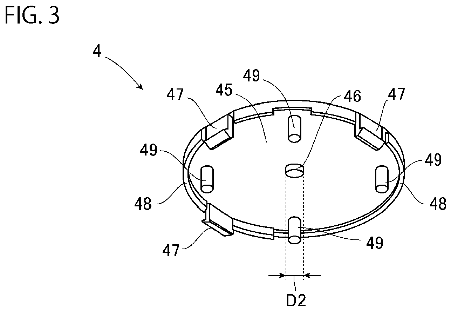

FIG. 3 is a diagram illustrating the pressing member 4 in a view different from FIG. 1. As illustrated in FIG. 3, the top wall 45 of the pressing member 4 includes a pressing part 46 which projects from a bottom face which faces the mounting part 21 of the base 2. In the present embodiment, the tip of the pressing part 46 has a planar shape, and the plane has a substantially circular shape. The pressing part 46 has an area smaller than the first electrode 56e and the second electrode 57e. In front view of an upper face 45S of the pressing member 4, the first electrode 56e and the second electrode 57e are located inside a range surrounded by the edge of the upper face 45S. Further, in front view of the upper face 45S of the pressing member 4, the pressing part 46 is located inside a range surrounded by the side face of each of the first electrode 56e and the second electrode 57e in a direction perpendicular to the thickness direction of the first electrode 56e and the second electrode 57e.

Further, the top wall 45 of the pressing member 4 includes a plurality of ribs 49 each of which projects from the bottom face of the top wall 45 at the same side as the pressing part 46. The ribs 49 are formed at positions overlapping the through holes 20H which are formed on the mounting part 21 of the base 2. In a state where the pressing member 4 covers the load detection sensor 5 which is mounted on the mounting part 21 of the base 2, and the hook pieces 47 are fitted in the respective hook openings 24, each of the ribs 49 is inserted in the corresponding one of the through holes 20H. Accordingly, even when the entire sheet surface of the load detection sensor 5 is not bonded to the mounting part 21, a relative movement between the load detection sensor 5 and the pressing part 46 of the pressing member 4 in the direction of the mounting face 21S is restricted. In a state where the pressing member 4 covers the load detection sensor 5 which is mounted on the mounting part 21, and each of the hook pieces 47 is fitted in the corresponding one of the hook openings 24, the tip of the pressing part 46 is in contact with the load detection sensor 5.

The pressing member 4 is formed of a material harder than the seat cushion SC. Thus, the pressing part 46, which is a part of the pressing member 4, is also formed of the material harder than the seat cushion SC. Typically, the seat cushion SC is made of a foamed urethane resin. Thus, examples of the material of the pressing member 4 include resins such as polycarbonate (PC), polyamide (PA), PBT, a phenol resin, and an epoxy resin.

In a state where the load detection sensor unit 1A as described above is attached to the pair of zigzag springs 100, the upper face 45S of the top wall 45 of the pressing member 4 faces a lower face of the seat cushion SC with a predetermined distance therebetween. The upper face 45S has a planar shape. The upper face 45S is a pressure receiving surface which receives pressing from the seat cushion SC. The area of the upper face 45S is larger than the area of a part of the pressing part 46, the part being in contact with the metal plate 60 of the load detection sensor 5.

Next, the load detection sensor 5 will be described in more detail.

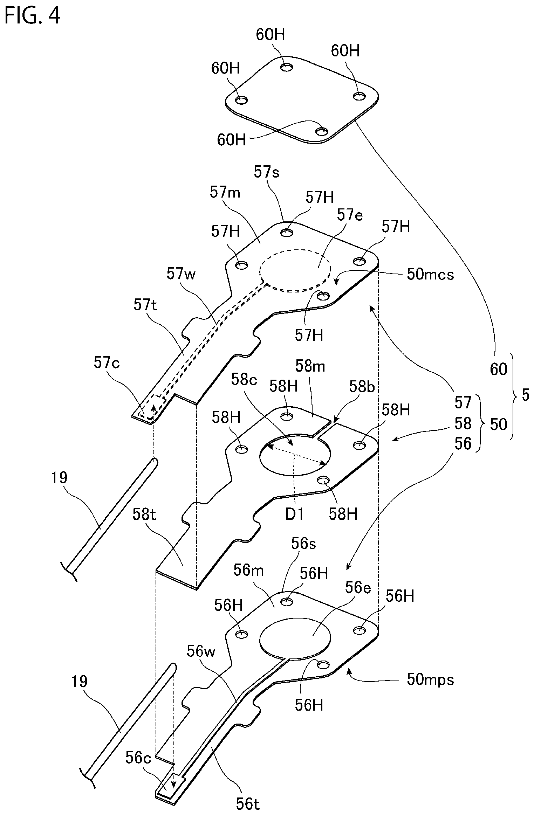

FIG. 4 is an exploded view of the load detection sensor 5. As illustrated in FIG. 4, the sensor sheet 50 includes a first electrode sheet 56, a spacer 58, and a second electrode sheet 57. The first electrode sheet 56 includes, as principal elements, a first insulating sheet 56s, the first electrode 56e, and a first terminal 56c.

The first insulating sheet 56s is a resin insulating sheet having flexibility. The first insulating sheet 56s includes a main block 56m which has the same shape as the main block 50m of the sensor sheet 50, and a tail block 56t which is connected to the main block 56m and has substantially the same shape as the tail block 50t of the sensor sheet 50. The shape of the tail block 56t differs from the shape of the tail block 50t of the sensor sheet 50 in that a tip part on the side opposite to the main block 56m is narrower than the other part of the tail block 56t. Further, the main block 56m includes through holes 56H which are formed at positions similar to the positions of the through holes 50H of the sensor sheet 50. Examples of a material of the first insulating sheet 56s include resins such as PET, polyimide (PI), and polyethylene naphthalate (PEN). In the main block 56m of the first insulating sheet 56s, a face opposite to the side facing the spacer 58 serves as the base-facing face 50mps of the main block 50m in the sensor sheet 50 (FIG. 2) as described above.

The first electrode 56e is disposed on one face of the main block 56m at substantially the center of the main block 56m. The first electrode 56e includes a conductor layer. For example, the first electrode 56e is a metal printed layer having a substantially circular shape. The first terminal 56c includes a conductor layer. The first terminal 56c is, for example, a metal layer having a substantially quadrangular shape. The first terminal 56c is disposed on a face of the tip part of the tail block 56t at the side having the first electrode 56e. The first electrode 56e and the first terminal 56c are electrically connected to each other through a first wiring line 56w.

The second electrode sheet 57 includes, as principal elements, a second insulating sheet 57s, the second electrode 57e, and a second terminal 57c.

The second insulating sheet 57s is closer to the seat cushion SC than the first electrode sheet 56 is (FIG. 2). The second insulating sheet 57s is a resin insulating sheet like the first insulating sheet 56s. In the present embodiment, the second insulating sheet 57s includes a main block 57m which has the same shape as the main block 56m of the first insulating sheet 56s, and a tail block 57t which is connected to the main block 57m and has the same shape as the tail block 56t of the first insulating sheet 56s except the shape of a tip part. The tip part of the tail block 57t is narrower than the other parts of the tail block 57t so that the tip part of the tail block 56t of the first insulating sheet 56s and the tip part of the tail block 57t of the second insulating sheet 57s do not overlap each other when the first insulating sheet 56s and the second insulating sheet 57s are stacked. In a manner similar to the first insulating sheet 56s, through holes 57H are formed on the main block 57m at positions similar to the positions of the through holes 50H of the sensor sheet 50. Examples of a material of the second insulating sheet 57s may include resins such as PET, PI, and PEN like the first insulating sheet 56s. The material of the second insulating sheet 57s may be different from or the same as the material of the first insulating sheet 56s.

The second electrode 57e is paired with the first electrode 56e and has a configuration similar to the configuration of the first electrode 56e. The second electrode 57e is disposed on one face of the main block 57m of the second insulating sheet 57s at substantially the center of the main block 57m. Further, the position of the second electrode 57e overlaps the first electrode 56e when the first electrode sheet 56 and the second electrode sheet 57 are stacked. The second terminal 57c has a configuration similar to the configuration of the first terminal 56c. The second terminal 57c is disposed on a face of the tip part of the tail block 57t at the side having the second electrode 57e. Further, as described above, when the first insulating sheet 56s and the second insulating sheet 57s are stacked, the tip part of the first insulating sheet 56s and the tip part of the second insulating sheet 57s do not overlap each other. Thus, the first terminal 56c and the second terminal 57c are not located between the first insulating sheet 56s and the second insulating sheet 57s, but exposed. The second electrode 57e and the second terminal 57c are electrically connected to each other through a second wiring line 57w.

The spacer 58 is a resin insulating sheet which is disposed between the first electrode sheet 56 and the second electrode sheet 57. The spacer 58 includes a main block 58m and a tail block 58t which is connected to the main block 58m. The outer shape of the main block 58m is similar to the outer shape of the main blocks 56m and 57m of the first insulating sheet 56s and the second insulating sheet 57s. The main block 58m includes an opening 58c which is formed at the center thereof. Further, through holes 58H are formed on the main block 58m at positions similar to the positions of the through holes 50H of the sensor sheet 50 in a manner similar to the first insulating sheet 56s and the second insulating sheet 57s. The tail block 58t has the same shape as the tail blocks 56t and 57t of the first insulating sheet 56s and the second insulating sheet 57s except that the tail block 58t includes no narrow tip part.

The opening 58c has a substantially circular shape and has a diameter slightly smaller than the diameter of the first electrode 56e and the second electrode 57e. In the present embodiment, preferably, the area of the plane on the tip of the pressing part 46 is equal to or larger than 3.0 mm². Preferably, the outer shape of the plane on the tip of the pressing part 46 is a substantially circular shape, and a diameter D2 of the plane is equal to or larger than 2.0 mm. Preferably, the area of the plane on the tip of the pressing part 46 is 0.8 times or less the area of the opening 58c. When the shape of the opening 58c and the outer shape of the plane on the tip of the pressing part 46 are both substantially circular shapes, the diameter D2 of the plane on the tip of the pressing part 46 is preferably 0.8 times or less the diameter D1 of the opening 58c.

The opening 58c is formed in such a manner that the opening 58c is located inside peripheral edges of the first electrode 56e and the second electrode 57e in plan view of the spacer 58 when the spacer 58, the first electrode sheet 56, and the second electrode sheet 57 are stacked. The spacer 58 further includes a slit 58b which connects a space inside the opening 58c to a space outside the sensor sheet 50. The slit 58b serves as an air vent when the first electrode sheet 56, the spacer 58, and the second electrode sheet 57 are stacked. The opening 58c may be located outside the peripheral edges of the first electrode 56e and the second electrode 57e in plan view of the spacer 58 when the spacer 58, the first electrode sheet 56, and the second electrode sheet 57 are stacked.

The first insulating sheet 56s of the first electrode sheet 56 is bonded to one face side of the spacer 58, and the second insulating sheet 57s of the second electrode sheet 57 is bonded to the other face side of the spacer 58. The spacer 58 may also serve as an adhesive or may not serve as an adhesive.

When the spacer 58 also serves as an adhesive, the spacer 58 includes a single layer as illustrated in FIG. 2. In this case, preferably, the elastic modulus of the spacer 58 under a temperature environment of 85°C is equal to or higher than 10 MPa. In this case, a curable resin such as a thermosetting resin or a photo-curable resin is employed as the material of the spacer 58. The curable resin in an uncured state is applied between the first insulating sheet 56s and the second insulating sheet 57s and then cured to obtain the spacer 58, and the spacer 58 directly adheres to the first insulating sheet 56s and the second insulating sheet 57s. This eliminates the necessity of providing an adhesive layer and an insulating sheet which are physically separate bodies.

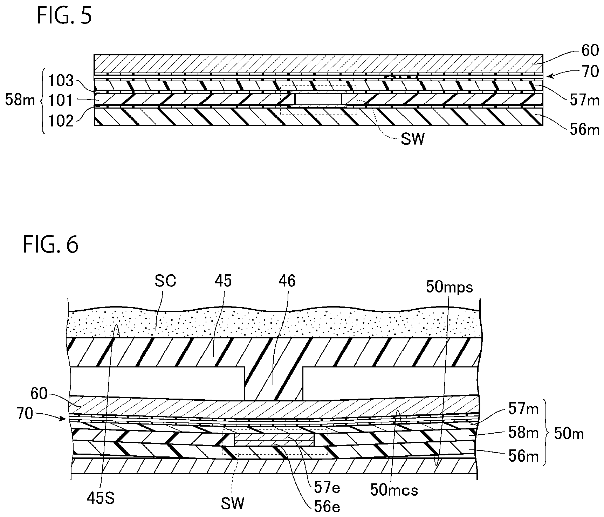

When the spacer 58 does not serve as an adhesive, the spacer 58 includes a plurality of layers including an insulating sheet 101 for spacer, a first adhesive layer 102, and a second adhesive layer 103 as illustrated in FIG. 5. In this case, preferably, the elastic modulus of the first adhesive layer 102 and the elastic modulus of the second adhesive layer 103 under a temperature environment of 85°C are equal to or higher than 10 MPa. The insulating sheet 101 is disposed between the first insulating sheet 56s and the second insulating sheet 57s. Examples of a material of the insulating sheet 101 include resins such as PET, PI, and PEN. The material of the insulating sheet 101 may be different from or the same as the material of the first insulating sheet 56s or the second insulating sheet 57s. The first adhesive layer 102 bonds the insulating sheet 101 and the first insulating sheet 56s together. Examples of a material of the first adhesive layer 102 include curable resins such as a thermosetting resin and a photo-curable resin and a thermoplastic resin. The second adhesive layer 103 bonds the insulating sheet 101 and the second insulating sheet 57s together. Examples of a material of the second adhesive layer 103 include curable resins such as a thermosetting resin and a photo-curable resin and a thermoplastic resin. The material of the first adhesive layer 102 may be different from or the same as the material of the second adhesive layer 103.

When the spacer 58 are bonded to the first electrode sheet 56 and the second electrode sheet 57, the first electrode 56e and the first wiring line 56w of the first electrode sheet 56 and the second electrode 57e and the second wiring line 57w of the second electrode sheet 57 are located between the first insulating sheet 56s and the second insulating sheet 57s. The first electrode 56e and the second electrode 57e face each other through the opening 58c to constitute the switch SW. In a state where the first electrode sheet 56, the spacer 58, and the second electrode sheet 57 are stacked, the through holes 56H, 57H, 58H overlap each other to form the through holes 50H of the sensor sheet 50.

Signal cables 19 which are connected to a control device (not illustrated) are connected to the first terminal 56c and the second terminal 57c of the sensor sheet 50. The first terminal 56c and the second terminal 57c are connected to the respective signal cables 19 with a conductive paste or by soldering. As illustrated in FIG. 1, an end of the tail block 50t of the sensor sheet 50, the end including the first terminal 56c and the second terminal 57c to which the signal cables 19 are connected, is covered with a sealing resin 18. The sealing resin 18 is made of, for example, a hot melt adhesive or a photo-curable resin. In this manner, detachment of the signal cables 19 from the first terminal 56c and the second terminal 57c is prevented, and a short circuit in the first terminal 56c and the second terminal 57c caused by conductive dust or the like is prevented.

The metal plate 60 is made of a metal plate material having a flexibility lower than the flexibility of the sensor sheet 50. The material of the metal plate 60 is not particularly limited to any material as long as the material is conductive metal. Examples of the material of the metal plate 60 include copper and stainless steel. In the present embodiment, the metal plate 60 has substantially the same shape as the main block 50m of the sensor sheet 50.

The metal plate 60 includes through holes 60H which are formed at positions similar to the positions of the through holes 50H of the sensor sheet 50. When the sensor sheet 50 and the metal plate 60 are stacked, the through holes 50H of the sensor sheet 50 overlap the respective through holes 60H of the metal plate 60. Further, when the sensor sheet 50 and the metal plate 60 are stacked, the metal plate 60 is disposed on the cushion side face 50mcs to cover the switch SW of the sensor sheet 50, the switch SW including the first electrode 56e and the second electrode 57e, and bonded to the cushion side face 50mcs with the adhesive layer 70. As described above, the cushion side face 50mcs is the face of the main block 57m of the second insulating sheet 57s, the face being opposite to the face facing the main block 56m of the first insulating sheet 56s.

In the present embodiment, a thickness T1 (FIG. 2) of the second insulating sheet 57s (the main block 57m and the tail block 57t) is less than a thickness T2 (FIG. 2) of the metal plate 60. According to the invention, a total thickness of the thickness T1 of the second insulating sheet 57s (the main block 57m and the tail block 57t) and a thickness T3 (FIG. 2) of the adhesive layer 70 is less than the thickness T2 of the metal plate 60. Preferably, the thickness T1 of the second insulating sheet 57s (the main block 57m and the tail block 57t) is less than a thickness T4 of the first insulating sheet 56s (the main block 56m and the tail block 56t). Preferably, the thickness T1 of the second insulating sheet 57s is within a range of 10% to 75% of the thickness T2 of the metal plate 60. Preferably, the thickness T2 of the metal plate 60 is within a range of 30 to 300 µm. Preferably, the thickness T3 of the adhesive layer 70 is within a range of 10 to 100 µm. Preferably, the thickness T1 of the second insulating sheet 57s is within a range of 10 to 100 µm. Preferably, the thickness T4 of the first insulating sheet 56s is within a range of 50 to 200 µm.

The load detection sensor 5 having the above configuration is mounted on the mounting part 21 of the base 2. Specifically, the main block 50m of the sensor sheet 50, the main block 50m including the first electrode 56e and the second electrode 57e, is located on the mounting part 21 of the base 2. The tail block 50t of the sensor sheet 50, the sealing resin 18, and the pair of signal cables 19 are led out of the base 2.

Further, as described above, in a state where the load detection sensor 5 mounted on the base 2 is covered with the pressing member 4, and the hook pieces 47 are fitted in the respective hook openings 24, the tip of the pressing part 46 is in contact with the position that overlaps the first electrode 56e and the second electrode 57e in the metal plate 60 of the load detection sensor 5. Further, in this state, each of the ribs 49 is inserted through the corresponding through hole 60H of the metal plate 60, the corresponding through hole 50H of the sensor sheet 50, and the corresponding through hole 20H of the base 2. Thus, even in a state where the base 2 and the first insulating sheet 56s are not bonded together, a relative movement between the load detection sensor 5 and the pressing part 46 of the pressing member 4 is restricted. That is, it can be understood that the ribs 49 are movement restriction members that restrict a relative movement between the sensor sheet 50 and the base 2 in the direction of the base-facing face 50mps.

Next, detection of seating by the load detection sensor unit 1A of the present embodiment will be described.

FIG. 6 is a diagram illustrating an ON state of the load detection sensor 5. When a person is seated on the seat device, the lower face of the seat cushion SC moves downward. The lower face of the seat cushion SC comes into contact with the upper face 45S of the pressing member 4 and presses the upper face 45S. Then, when the lower face of the seat cushion SC further moves downward, the tip of the pressing part 46 presses the metal plate 60, and the main block 57m of the second insulating sheet 57s is also bent by bending of the metal plate 60 as illustrated in FIG. 6. At this time, since the base-facing face 50mps of the main block 56m of the first insulating sheet 56s is not bonded to the base 2, at least a part around the first electrode 56e and the second electrode 57e deforms following the bending of the metal plate 60. As a result, the second electrode 57e comes into contact with the first electrode 56e to turn on the load detection sensor 5, and a load is detected. Then, the vehicle control unit (not illustrated) which is connected to the signal cables 19 detects the seating.

As described above, the load detection sensor 5 of the present embodiment includes the sensor sheet 50 and the metal plate 60 which is disposed on the cushion side face 50mcs of the sensor sheet 50 in a part overlapping the first electrode 56e and the second electrode 57e.

When the metal plate 60 is pressed, the metal plate 60 is bent, and the main block 57m of the second insulating sheet 57s of the sensor sheet 50 is also bent following the bending of the metal plate. Accordingly, the first electrode 56e and the second electrode 57e come into contact with each other to turn on the load detection sensor 5, and a load is detected. Metal is less prone to creep than resin. Thus, the metal plate 60 is less prone to have a pressing impression than the second insulating sheet 57s made of resin. Thus, in the load detection sensor 5, it is possible to prevent erroneous load detection caused by a pressing impression.

Resin tends to more easily deform according to the environment temperature than metal. In the load detection sensor 5 of the present embodiment, the thickness T1 of the second insulating sheet 57s (the main block 57m and the tail block 57t) is less than the thickness T2 of the metal plate 60. Thus, it is possible to reduce a deformation amount of the second insulating sheet 57s made of resin compared to the case where the thickness T1 of the second insulating sheet 57s is equal to or larger than the thickness T2 of the metal plate 60. That is, the present embodiment is close to the case where only the metal plate 60 is provided without the second insulating sheet 57s. Thus, it is possible to reduce variations in a load (ON load) applied to the load detection sensor 5 at the point when the load detection sensor 5 is turned on, the variations being caused by temperature changes. As a result, it is possible to prevent erroneous load detection caused by temperature changes.

An experiment in which a load is applied under different temperature environments was performed with a comparative example in which the thickness T1 of the second insulating sheet 57s is equal to the thickness T2 of the metal plate 60 in the load detection sensor 5 and Examples 1 and 2 in which the thickness T1 of the second insulating sheet 57s is less than the thickness T2 of the metal plate 60.

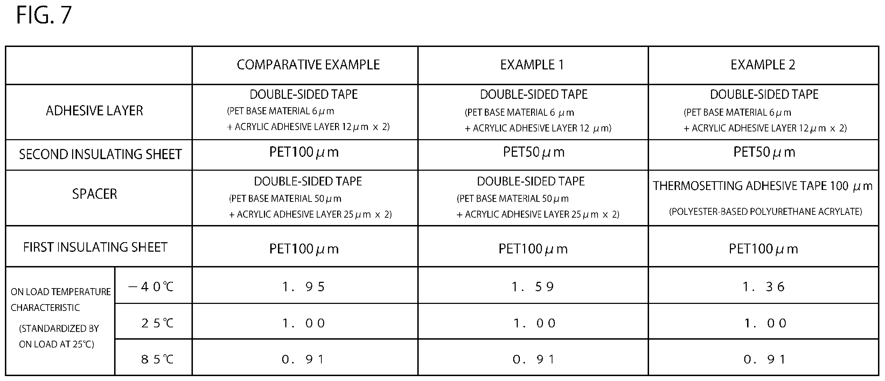

As illustrated in FIG. 7, a sheet which is made of PET and has a thickness of 100 µm is used as the second insulating sheet 57s of the comparative example, and a sheet which is made of PET and has a thickness of 50 µm is used as the second insulating sheet 57s of Examples 1 and 2. In each of the comparative example and the examples, a double-sided tape including a base material which is made of PET and has a thickness of 6 µm and adhesive layers each of which has a thickness of 12 µm and which are made of acrylic resin and applied to both faces of the base material is used as the adhesive layer 70. In the comparative example and Example 1, a double-sided tape including a base material which is made of PET and has a thickness of 50 µm and adhesive layers each of which has a thickness of 25 µm and which are made of acrylic resin and applied to both faces of the base material is used as the spacer 58. In Example 2, a thermosetting adhesive tape which is made of polyester-based polyurethane acrylate and has a thickness of 100 µm is used as the spacer 58. In each of the comparative example and the examples, a sheet which is made of PET and has a thickness of 100 µm is used as the first insulating sheet 56s.

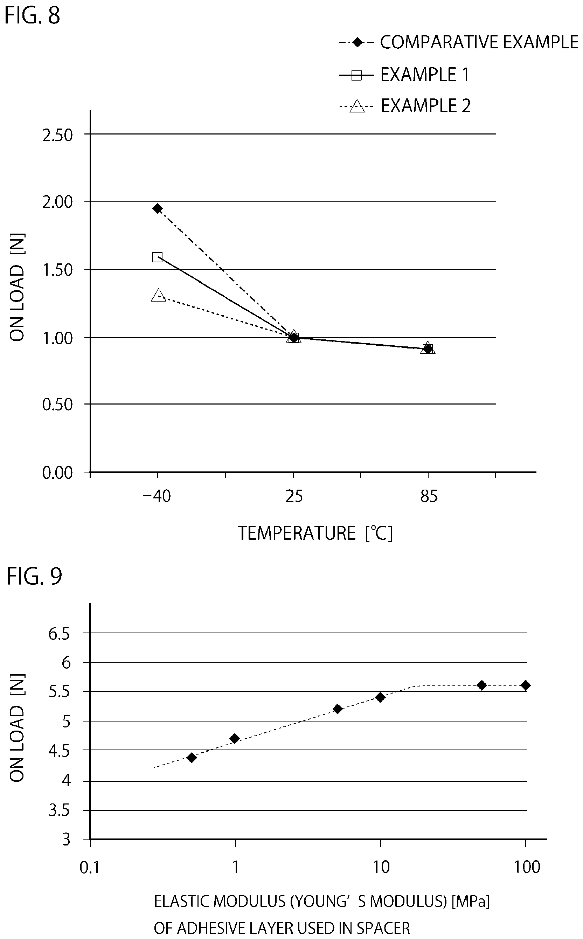

As a method of the experiment, the load detection sensor 5 of the comparative example, the load detection sensor 5 of Example 1, and the load detection sensor 5 of Example 2 are disposed under temperature environments of - 40°C, 25°C, and 85°C, and a load (ON load) applied at the point when the paired electrodes 56e and 57e come into contact with each other by pressing the load detection sensor from the metal plate side is measured. In FIG. 7, an ON load measured under the temperature environment of 25°C is defined as 1.0, and an ON load measured under the temperature environment of -40°C and an ON load measured under the temperature environment of 85°C are expressed by the ratio with respect to the ON load measured under the temperature environment of 25°C which is defined as 1.0. FIG. 8 shows these numerical values in a graph.

As illustrated in FIGS. 7 and 8, variations in the ON load caused by temperature changes when the thickness T1 of the second insulating sheet 57s is less than the thickness T2 of the metal plate 60 in the load detection sensor 5 are smaller than variations in the ON load when the thickness T1 of the second insulating sheet 57s is equal to the thickness T2 of the metal plate 60. That is, even when the temperature becomes higher or lower than the ordinary temperature, it is possible to detect a load in the same manner as the ordinary-temperature environment. Thus, it is possible to prevent erroneous load detection caused by temperature changes. In this manner, according to the load detection sensor 5 of the present embodiment, it is possible to appropriately detect a load.

In the load detection sensor 5 of the present embodiment, the main block 57m of the second insulating sheet 57s and the metal plate 60 are bonded together with the adhesive layer 70. Thus, when pressing to the metal plate 60 is released, and the metal plate 60 returns to a position in an unpressed state, the metal plate 60 can return the main block 57m of the second insulating sheet 57s to the position. Thus, in the load detection sensor 5, even when an environmental temperature around the load detection sensor 5 changes, the main block 57m of the second insulating sheet 57s is less prone to have a pressing impression. In addition, since the total thickness of the thickness T1 of the second insulating sheet 57s and the thickness T3 of the adhesive layer 70 is less than the thickness T2 of the metal plate 60, it is possible to more reliably prevent erroneous load detection caused by temperature changes.

It is known that the adhesive layer 70 is cured and the elastic modulus thereof becomes extremely high under a low-temperature environment. In particular, when the temperature is equal to or lower than the glass transition temperature of the adhesive layer 70, the influence of the elastic modulus of the adhesive layer 70 becomes nonnegligible. Since the elastic modulus of the adhesive layer 70 largely changes according to temperature, the influence of the elastic modulus of the adhesive layer 70 is preferably 10% or less in order to stabilize the ON load of the sensor. For example, when the elastic modulus of the adhesive layer 70 increases to approximately 20% of the elastic modulus of the second insulating sheet 57s under the low-temperature environment, it is required that the thickness T3 of the adhesive layer 70 be 0.8 times or less the thickness T1 of the second insulating sheet 57s. That is, when the thickness T3 of the adhesive layer 70 is 0.8 times or less the thickness T1 of the second insulating sheet 57s, it is possible to stabilize the ON load. When the adhesive layer 70 is pressed by the pressing part 46 through the metal plate 60 as described in the present embodiment, setting the thickness T3 of the adhesive layer 70 to 0.8 times or less the thickness T1 of the second insulating sheet 57s is particularly effective in stabilizing the ON load. Note that even when the adhesive layer 70 is not pressed by the pressing part 46, the ON load under the low-temperature environment is stabilized by setting the thickness T3 of the adhesive layer 70 to 0.8 times or less the thickness T1 of the second insulating sheet 57s.

When the thickness T3 of the adhesive layer 70 is equal to or larger than 10 µm, it is possible to prevent a reduction in the ON load, the reduction being caused by an excessive pressing force applied to the adhesive layer 70 under a high-temperature environment, which causes the adhesive layer 70 to laterally flow to reduce the thickness of the adhesive layer 70 to a certain thickness or less, and prevent the electrodes from constantly making contact with each other due to a loss of adhesiveness.

When the thickness T1 of the second insulating sheet 57s is within the range of 10% to 75% of the thickness T2 of the metal plate 60, it is possible to prevent erroneous load detection caused by temperature changes while ensuring the durability of the second insulating sheet 57s.

When the thickness T1 of the second insulating sheet 57s is less than the thickness T4 of the first insulating sheet 56s, it is possible to prevent erroneous load detection caused by temperature changes while further reducing the thickness of the load detection sensor 5.

In the load detection sensor 5 of the present embodiment, the spacer 58 is disposed between the first insulating sheet 56s and the second insulating sheet 57s. When the double-sided tape as illustrated in FIG. 5 is used as the spacer 58, the ON load increases with an increase of the elastic modulus of the acrylic resin adhesive layer in the double-sided tape as illustrated in FIG. 9. However, it has been confirmed that an increasing rate of the ON load decreases from 10 MPa of the elastic modulus of the adhesive layer and hardly changes from 20 MPa of the elastic modulus of the adhesive resin. Further, typically, resin tends to become hard at a low temperature. Thus, when the elastic modulus of the first adhesive layer 102 and the elastic modulus of the second adhesive layer 103 under the temperature environment of 85°C are equal to or higher than 10 MPa, the elastic modulus of the spacer 58 becomes equal to or higher than 10 MPa even under a temperature environment of lower than 85°C. Similarly, in a case where the spacer 58 as illustrated in FIG. 2 which also serves as an adhesive between the first insulating sheet 56s and the second insulating sheet 57s is used, when the elastic modulus of the spacer 58 under the temperature environment of 85°C is equal to or higher than 10 MPa, the elastic modulus of the spacer 58 becomes equal to or higher than 10 MPa even under a temperature environment of lower than 85°C. When the elastic modulus of an element that takes part in adhesion in the spacer 58 is equal to or higher than 10 MPa in this manner, the deformation of the spacer 58 is small from low temperature through high temperature, and a change in the thickness is also small. Thus, it is possible to prevent erroneous load detection caused by the change. This can be confirmed also from experiment results of Examples 1 and 2 illustrated in FIGS. 7 and 8.

In the load detection sensor unit 1A of the present embodiment, the metal plate 60 of the load detection sensor 5 is pressed by the pressing part 46 which is harder than the seat cushion. Thus, it is possible to appropriately bend the metal plate 60 and appropriately detect seating compared to the case where the metal plate 60 is directly pressed by the seat cushion SC.

In the load detection sensor unit 1A of the present embodiment, in the main block 50m of the sensor sheet 50 which is mounted on the base 2, the entire base-facing face 50mps which faces the base 2 is not bonded to the base 2. Thus, at least a part around the region overlapping the first electrode 56e and the second electrode 57e on the base-facing face 50mps of the main block 50m easily deforms in a rising manner. Thus, at least a peripheral edge part which is the part around the first electrode 56e and the second electrode 57e easily deforms following the bending of the metal plate 60 (FIG. 4). As a result, it is possible to appropriately detect seating.

In this manner, in the load detection sensor unit 1A of the present embodiment, the sensor sheet 50 easily deforms following the metal plate 60 during pressing. On the other hand, the sensor sheet 50 is deformed to easily return to its original position by the metal plate 60 during unpressing.

In the load detection sensor unit 1A of the present embodiment, the ribs 49 which restrict the relative movement between the main block 50m and the base 2 in the direction of the base-facing face 50mps are provided.

Thus, even when the entire main block 50m which is mounted on the base 2 is not bonded, a displacement of the main block 50m with respect to the base 2 is prevented, and it is possible to prevent the main block 50m from being displaced with respect to the base 2. Thus, it is possible to prevent a trouble of the load detection sensor 5 not being turned on even when the load detection sensor 5 is pressed by the pressing part 46.

In the load detection sensor unit 1A of the present embodiment, the ribs 49 are inserted through the through holes 50H formed on the sensor sheet 50 and the through holes 20H formed on the base 2, which makes it easy to prevent a displacement of the sensor sheet 50 with respect to the base 2.

In the load detection sensor unit 1A of the present embodiment, each of the ribs 49 is a part of the pressing member 4.

Thus, a displacement in the positional relationship between the pressing part 46 of the pressing member 4 and the first electrode 56e and the second electrode 57e is prevented, and it is possible to prevent a trouble of the load detection sensor 5 not being turned on even when the load detection sensor 5 is pressed by the pressing part 46. Further, a part of the pressing member 4 serves as each of the ribs 49. Accordingly, even when the entire main block 50m mounted on the base 2 is not bonded, it is possible to prevent a displacement of the main block 50m with respect to the base 2 without additionally providing a movement restriction member other than the pressing member 4. Thus, when the load detection sensor unit 1A includes the pressing member 4 as described in the present embodiment, it is possible to simplify the configuration of the load detection sensor unit 1A.

In the load detection sensor unit 1A of the present embodiment, the pressing member 4 includes the top wall 45 which receives pressing from the seat cushion SC, the top wall 45 having an area larger than the contact area of the pressing part 46 with the metal plate 60.

Since the area of the top wall 45 which is pressed by the seat cushion SC is larger than the contact area of the pressing part 46 with the metal plate 60, the pressing force from the seat cushion SC can be concentrated on the pressing part 46 by the top wall 45, and the metal plate 60 can be more appropriately bent. Thus, with the pressing member 4, it is possible not only to protect the first electrode 56e and the second electrode 57e of the sensor sheet 50, but also to more appropriately detect seating.

In the load detection sensor unit 1A of the present embodiment, the area of the top wall 45 is larger than the area of the first electrode 56e and the second electrode 57e which are pressed by the pressing part 46, and the pressing part 46 has an area smaller than the first electrode 56e and the second electrode 57e. Since the top wall 45 has an area larger than the first electrode 56e and the second electrode 57e, the top wall 45 can receive a larger load than the first electrode 56e and the second electrode 57e. In addition, the seat cushion SC can apply a force to the top wall 45 from a position other than immediately above the first electrode 56e and the second electrode 57e. Further, since the pressing part 46 has an area smaller than the first electrode 56e and the second electrode 57e, it is possible to transmit the pressing force concentrated by the top wall 45 of the pressing member 4 on the pressing part 46 to the first electrode 56e and the second electrode 57e without distributing the concentrated pressing force. Thus, it is possible to more appropriately detect seating.

In the load detection sensor unit 1A of the present embodiment, the tip of the pressing part 46 has a planar shape. When the tip of the pressing part 46 has a planar shape, the pressing force applied to the load detection sensor 5 from the pressing part 46 is distributed compared to the case where the tip part has a projecting curved surface shape. Thus, the adhesive layer 70 of the load detection sensor 5 is less prone to escape to the lateral side by the pressing of the pressing part 46. Thus, the adhesive layer 70 is less prone to have a pressing impression. As a result, a pressing impression on the metal plate 60 following the adhesive layer 70 is also reduced.

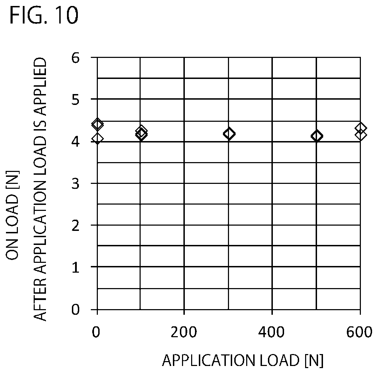

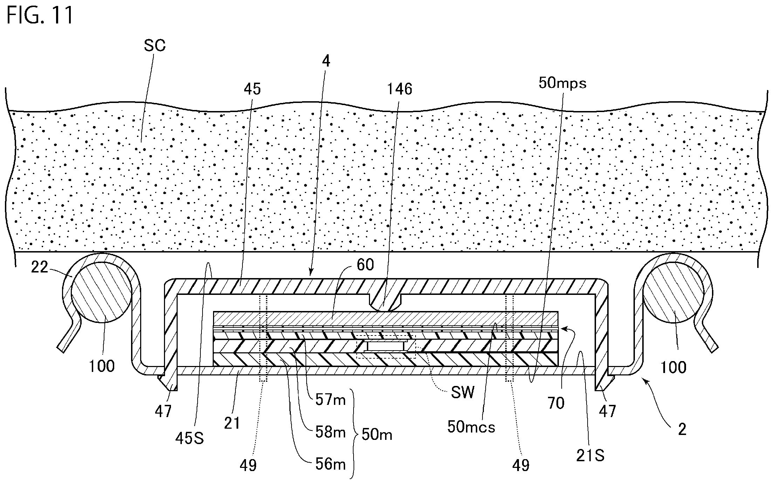

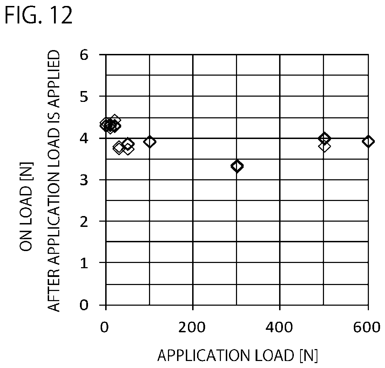

FIG. 10 shows a result of an experiment when the pressing part 46 whose tip has a planar shape of the present embodiment presses the load detection sensor 5. Further, a pressing part 146 whose tip has a projecting curved surface shape is employed instead of the pressing part 46 of the present embodiment as illustrated in FIG. 11, and FIG. 12 shows a result of an experiment when the pressing part 146 presses the load detection sensor 5. A method of the experiment is as follows. A predetermined application load is applied to the load detection sensor 5 for only one second under an environment of 25°C. Then, a load is applied to the load detection sensor 5 again, and a load (ON load) at the point when the paired electrodes 56e, 57e come into contact with each other is measured. The application load is increased by 10 N each time from an unloaded state (zero N), and the ON load is measured for each application load. Further, the number of measurements of the ON load is three. As illustrated in FIGS. 10 and 12, it can be understood that, when the pressing part 46 whose tip has a planar shape is used, variations in the ON load are smaller than variations when the pressing part 146 whose tip has a projecting curved surface shape is used, and the adhesive layer 70 and the metal plate 60 of the load detection sensor 5 are less prone to have a pressing impression.

A load applied to the load detection sensor unit 1A as a weight when a heavy man (95% from the lowest in statistics on the weight of men) is seated is approximately 20 N. When the load of approximately 20 N is applied to the load detection sensor unit 1A, an excessive force is applied to the metal plate 60 from the pressing part 46, which may cause a plastic deformation in a part of the metal plate 60 pressed by the pressing part 46. In this case, the ON load is reduced, and the load cannot be appropriately detected.

In the present embodiment, the area of the plane on the tip of the pressing part 46 is equal to or larger than 3.0 mm². Further, the outer shape of the plane on the tip of the pressing part 46 is a substantially circular shape, and the diameter D2 of the plane is equal to or larger than 2.0 mm. In this case, it is possible to prevent a trouble of the load detection sensor 5 not being turned on due to an excessively distributed pressing force while more reliably preventing the plastic deformation in the part of the metal plate 60 pressed by the pressing part 46.

Further, in the present embodiment, the area of the plane on the tip of the pressing part 46 is 0.8 times or less the area of the opening 58c. Further, the diameter D2 of the plane on the tip of the pressing part 46 is 0.8 times or less the diameter D1 of the opening 58c. In this case, it is possible to prevent distribution of the pressing force caused by too large size of the pressing part 46 and prevent a trouble of the load detection sensor 5 not being turned on.

### (2) Modifications

The load detection sensor unit of the present invention has been described above with the embodiment as an example. However, the present invention is not limited to the above embodiment.

For example, in the above embodiment, the metal plate 60 is bonded to the cushion side face 50mcs of the main block 50m which is a part of the sensor sheet 50. However, the metal plate 60 may be bonded to a part including the main block 50m and a part of the tail block 50t on one face of the sensor sheet 50 at the seat cushion SC side or may be bonded to the entire one face. In short, a metal plate that is bonded to at least a part overlapping the first electrode 56e and the second electrode 57e on one face of the sensor sheet 50 at the seat cushion SC side can be employed.

In the above embodiment, the main block 50m which includes the first electrode 56e and the second electrode 57e and is wider than the first electrode 56e and the second electrode 57e is disposed on the base 2. However, the main block 50m and a part of the tail block 50t may be disposed on the base 2, or the entire sensor sheet 50 may be disposed on the base 2. In the present embodiment, the base is the base 2 for disposing the sensor sheet 50 between the paired zigzag springs 100. However, the base is not limited to the base 2. For example, various members, such as a seat pan and a part of a vehicle body, on which at least the first electrode 56e and the second electrode 57e can be disposed may be used as the base.

In the above embodiment, in the main block 50m which is disposed on the base 2, the entire base-facing face 50mps of the main block 50m which faces the mounting face 21S of the mounting part 21 is not bonded to the mounting part 21. However, a region AR overlapping the first electrode 56e and the second electrode 57e in the base-facing face 50mps may be bonded, and the entire base-facing face 50mps except the region AR may not be bonded. Further, the entire main block 50m which is disposed on the base 2 may be bonded to the base 2.

In the above embodiment, the ribs 49 restrict the relative movement between the sensor sheet 50 and the metal plate 60 in the plane direction. However, the ribs 49 are not essential elements. In this case, for example, preferably, the region AR overlapping the first electrode 56e and the second electrode 57e in the main block 50m is bonded as described above.

In the above embodiment, the pressing part 46 and the top wall 45 of the pressing member 4 are integrally molded. However, the pressing part 46 may be a separate body from the top wall 45 and attached to the top wall 45.

In the above embodiment, the tip of the pressing part 46 has a planar shape. However, the tip of the pressing part 46 may have a projecting curved surface shape as illustrated in FIG. 10. When the tip of the pressing part 46 has a projecting curved surface shape, it is possible to concentrate the pressing force applied to the load detection sensor 5 from the pressing part 46 compared to the case where the tip has a planar shape. Thus, it is possible to appropriately detect a load even in a state where it is difficult for the pressing force from the pressing part 46 to be transmitted to the load detection sensor 5 such as a case where the metal plate 60 in the load detection sensor 5 is thick.

In the above embodiment, the pressing part 46 abuts on the metal plate 60 in a state other than detection of seating where no external pressure is applied. However, the pressing part 46 may be separated from the metal plate 60 in a state other than detection of seating where no external pressure is applied. The pressing part 46 and the metal plate 60 are disposed between the seat cushion SC and the sensor sheet. However, a face of the sensor sheet 50, the face being opposite to the seat cushion SC, and the metal plate 60 may be bonded together, and the pressing part 46 may be disposed on the metal plate 60 at the side opposite to the sensor sheet 50 (the side opposite to the seat cushion SC). In this case, when the sensor sheet 50 and the seat cushion SC can be fixed, the base 2 may not be provided.

In the above embodiment, the top wall 45 of the pressing member 4 is separated from the seat cushion SC in a state other than detection of seating where no external pressure is applied. However, the top wall 45 of the pressing member 4 may abut on the seat cushion SC in a state other than detection of seating where no external pressure is applied.

In the above embodiment, the sensor sheet 50 includes the first insulating sheet 56s and the second insulating sheet 57s which include the switch SW and face each other, the spacer 58 which is disposed between the insulating sheets 56s and 57s and includes the opening 58c, the first electrode 56e which is disposed on the face of the first insulating sheet 56s, the face facing the insulating sheet 57s, and the second electrode 57e which is paired with the first electrode 56e and disposed on the second insulating sheet 57s in a state facing the first electrode 56e with a distance therebetween through the opening 58c. However, the configuration of the sensor sheet 50 is not limited to the above embodiment.

For example, the first electrode 56e or the second electrode 57e of the sensor sheet 50 may include a first comb-like electrode piece and a second tooth-like electrode piece which is meshed with the first comb-like electrode piece with a space therebetween.

For example, a sensor sheet including a first electrode and a second electrode which are made of a material having a high resistance value such as carbon and disposed on the respective facing faces of the first insulating sheet 56s and the second insulating sheet 57s with the first electrode and the second electrode kept in contact with each other through the opening 58c of the spacer 58 may be used. In the sensor sheet, when a pressing force is applied, the resistance value of the pair of electrodes decreases. When the resistance value changing in this manner falls below a threshold which is set as a resistance value when a predetermined load is applied, reception of the load is detected.

For example, a sensor sheet including the first electrode 56e and the second electrode 57e which are disposed on the respective facing faces of the first insulating sheet 56s and the second insulating sheet 57s with the first electrode 56e and the second electrode 57e kept in contact with each other through a conductive rubber which is disposed in the opening 58c of the spacer 58 may be used. In the sensor sheet, when a pressing force is applied, the conductive rubber displaces, which reduces the resistance value between the electrodes 56e and 57e. When the resistance value changing in this manner falls below a threshold which is set as a resistance value when a predetermined load is applied, reception of the load is detected.

For example, a sensor sheet as described below may be used. A first comb-like electrode pieces as a first electrode and a second tooth-like electrode piece as a second electrode are disposed on the face of the first insulating sheet 56s, the face facing the second insulating sheet 57s, and a conductive rubber is disposed on the face of the second insulating sheet 57s, the face facing the first insulating sheet 56s. In addition, the spacer 58 is disposed between the first insulating sheet 56s and the second insulating sheet 57s so that the conductive rubber faces the first comb-like electrode piece and the second tooth-like electrode piece through the opening 58c. In the sensor sheet, when a pressing force is applied, a contact area between the first comb-like electrode piece and the second tooth-like electrode piece increases to reduce the output resistance value, and the conductive rubber displaces to reduce the resistance value between the first comb-like electrode piece and the second tooth-like electrode piece. When the resistance value changing in this manner falls below a threshold which is set as a resistance value when a predetermined load is applied, reception of the load is detected. The spacer 58 of the sensor sheet may be omitted.

For example, a capacitance sensor sheet in which a sheet-like spacer which does not include the opening 58c and has flexibility is disposed between the first insulating sheet 56s and the second insulating sheet 57s, and the first electrode 56e and the second electrode 57e which face each other across the spacer are disposed on the respective faces of the insulating sheets 56s, 57s may be used. In the sensor sheet, when a pressing force is applied, the distance between the electrodes 56e, 57e is reduced by bending of the spacer, which increases a capacitance generated between the electrodes 56e, 57e. When the resistance value changing in this manner falls below a threshold which is set as a resistance value when a predetermined load is applied, reception of the load is detected.

Combinations, omissions, changes, and additions of known techniques other than the above embodiment and the above modifications can be appropriately performed on the elements of the above load detection sensor unit 1A within the scope of the present application.

The load detection device of the present invention is applicable as long as the load detection device detects the presence or absence of a load with respect to a detection target whose load should be detected. The present invention is not limited to the above embodiment, and another form may be employed. For example, the load detection device may be disposed under a seat cushion of an invalid bed. Also in such a form, the load detection device is capable of detecting a load, and it is possible to obtain information indicating whether a person is present on the seat cushion on the basis of a result of the detection by the load detection device. Further, the load detection device may be used as a switch of an electronic device to detect the present or absence of a load.

### Reference Signs List

- 1A: load detection sensor unit
- 2: base
- 4: pressing member
- 5: load detection sensor
- 46, 146: pressing part
- 49: rib
- 50: sensor sheet
- 56: first electrode sheet
- 56e: first electrode
- 56s: first insulating sheet
- 57: second electrode sheet
- 57e: second electrode
- 57s: second insulating sheet
- 58: spacer
- 60: metal plate
- 70: adhesive layer
- SC: seat cushion
- SW: switch

## Claims

1. A load detection sensor (5) comprising:
a sensor sheet (50) including a first insulating sheet (56s) made of resin and a second insulating sheet (57s) made of resin, the first insulating sheet (56s) and the second insulating sheet (57s) facing each other, a first electrode (56e) disposed on a face of the first insulating sheet (56s), the face facing the second insulating sheet (57s), and a second electrode (57e) disposed between the first insulating sheet (56s) and the second insulating sheet (57s) and paired with the first electrode (56e); and
a metal plate (60) disposed on a face of the second insulating sheet (57s), the face being opposite to a face facing the first insulating sheet (56s), at least in a part overlapping the first electrode (56e) and the second electrode (57e),
**characterized by**
an adhesive layer (70) that is disposed between the second insulating sheet (57s) and the metal plate (60) and bonds the second insulating sheet (57s) and the metal plate (60) together, and
in that a total thickness of a thickness (T1) of the second insulating sheet (57s) and a thickness (T3) of the adhesive layer (70) is less than a thickness (T2) of the metal plate (60).

2. The load detection sensor (5) according to claim 1, wherein
the thickness (T3) of the adhesive layer (70) is equal to or larger than 10 µm and 0.8 times or less the thickness (T1) of the second insulating sheet (57s).

3. The load detection sensor (5) according to any one of claims 1 to 2, wherein the thickness (T1) of the second insulating sheet (57e) is within a range of 10% to 75% of the thickness (T2) of the metal plate (60).

4. The load detection sensor (5) according to any one of claims 1 to 3, wherein the thickness (T1) of the second insulating sheet (57s) is less than a thickness (T4) of the first insulating sheet (56s).

5. The load detection sensor (5) according to any one of claims 1 to 4, further comprising a spacer (58) disposed between the first insulating sheet (56s) and the second insulating sheet (57s), wherein
an elastic modulus of the spacer (58) under a temperature environment of 85°C is equal to or higher than 10 MPa.

6. The load detection sensor (5) according to any one of claims 1 to 4, further comprising a spacer (58) including an insulating sheet (101) disposed between the first insulating sheet (56s) and the second insulating sheet (57s), a first adhesive layer (102) that bonds the insulating sheet (101) and the first insulating sheet (56s) together, and a second adhesive layer (103) that bonds the insulating sheet (101) and the second insulating sheet (57s) together, wherein
an elastic modulus of the first adhesive layer (102) and an elastic modulus of the second adhesive layer (103) under a temperature environment of 85°C are equal to or higher than 10 MPa.

7. A load detection sensor unit (1a) comprising:
the load detection sensor (5) according to any one of claims 1 to 6; and
a pressing member (4) disposed on the metal plate (60) at a side opposite to the sensor sheet (50), the pressing member (4) including a pressing part (46, 146) for pressing the metal plate (60).

8. The load detection sensor unit (1a) according to claim 7, wherein
the pressing member (4) includes a top wall (45) disposed for receiving pressing from a seat cushion (SC), the top wall (45) having an area larger than a contact area of the pressing part (46) with the metal plate (60).

9. The load detection sensor unit (1a) according to claim 8, wherein
the top wall (45) has an area larger than the first electrode (56e) and the second electrode (57e), and
the pressing part (46) has an area smaller than the first electrode (56e) and the second electrode (57e).

## Patentansprüche

1. Lastdetektionssensor (5), umfassend:
eine Sensorfolie (50), die eine erste isolierende Folie (56s) aus Harz und eine zweite isolierende Folie (57s) aus Harz enthält, wobei die erste isolierende Folie (56s) und die zweite isolierende Folie (57s) einander zugewandt sind, eine erste Elektrode (56e), die auf einer Oberfläche der ersten isolierenden Folie (56s) angeordnet ist, wobei die Oberfläche der zweiten isolierenden Folie (57s) zugewandt ist, und eine zweite Elektrode (57e), die zwischen der ersten isolierenden Folie (56s) und der zweiten isolierenden Folie (57s) angeordnet ist und mit der ersten Elektrode (56e) gepaart ist; und
eine Metallplatte (60), die auf einer Oberfläche der zweiten isolierenden Folie (57s) angeordnet ist, wobei die Oberfläche einer der ersten isolierenden Folie (56s) zugewandten Oberfläche gegenüberliegt, die zumindest in einem Teil die erste Elektrode (56e) und die zweite Elektrode (57e) überlappt,
**dadurch gekennzeichnet, dass**
eine Klebeschicht (70), die zwischen der zweiten isolierenden Folie (57s) und der Metallplatte (60) angeordnet ist und die zweite isolierende Folie (57s) und die Metallplatte (60) miteinander verbindet, und
dadurch, dass eine Gesamtdicke aus einer Dicke (T1) der zweiten isolierenden Folie (57s) und einer Dicke (T3) der Klebeschicht (70) kleiner als eine Dicke (T2) der Metallplatte (60) ist.

2. Lastdetektionssensor (5) nach Anspruch 1, wobei
die Dicke (T3) der Klebeschicht (70) gleich oder größer als 10 µm und 0,8-mal oder weniger der Dicke (T1) der zweiten isolierenden Folie (57s) ist.

3. Lastdetektionssensor (5) nach einem der Ansprüche 1 und 2, wobei die Dicke (T1) der zweiten isolierenden Folie (57e) innerhalb eines Bereichs von 10% bis 75% der Dicke (T2) der Metallplatte (60) liegt.

4. Lastdetektionssensor (5) nach einem der Ansprüche 1 bis 3, wobei die Dicke (T1) der zweiten isolierenden Folie (57s) kleiner als eine Dicke (T4) der ersten isolierenden Folie (56s) ist.

5. Lastdetektionssensor (5) nach einem der Ansprüche 1 bis 4, der ferner einen Abstandshalter (58) umfasst, der zwischen der ersten isolierenden Folie (56s) und der zweiten isolierenden Folie (57s) angeordnet ist, wobei
ein Elastizitätsmodul des Abstandshalters (58) bei einer Umgebungstemperatur von 85°C gleich oder größer als 10 MPa ist.

6. Lastdetektionssensor (5) nach einem der Ansprüche 1 bis 4, ferner umfassend einen Abstandshalter (58), der eine isolierende Folie (101), die zwischen der ersten isolierenden Folie (56s) und der zweiten isolierende Folie (57s) angeordnet ist, eine erste Klebeschicht (102), die die isolierende Folie (101) und die erste isolierende Folie (56s) miteinander verbindet, und eine zweite Klebeschicht (103), die die isolierende Folie (101) und die zweite isolierende Folie (57s) miteinander verbindet, umfasst, wobei
ein Elastizitätsmodul der ersten Klebeschicht (102) und ein Elastizitätsmodul der zweiten Klebeschicht (103) bei einer Umgebungstemperatur von 85°C gleich oder größer als 10 MPa sind.

7. Lastdetektionssensoreinheit (1a), umfassend:
den Lastdetektionssensor (5) nach einem der Ansprüche 1 bis 6; und
ein Druckelement (4), das auf der Metallplatte (60) an einer der Sensorfolie (50) gegenüberliegenden Seite angeordnet ist, wobei das Druckelement (4) einen Druckteil (46, 146) zum Drücken der Metallplatte (60) enthält.

8. Lastdetektionssensoreinheit (1a) nach Anspruch 7, wobei
das Druckelement (4) eine obere Wand (45) umfasst, die angeordnet ist, um Druck von einem Sitzpolster (SC) aufzunehmen, wobei die obere Wand (45) eine Fläche aufweist, die größer ist als eine Kontaktfläche des Druckteils (46) mit der Metallplatte (60).

9. Lastdetektionssensoreinheit (1a) nach Anspruch 8, wobei
die obere Wand (45) eine Fläche hat, die größer ist als die erste Elektrode (56e) und die zweite Elektrode (57e), und
der Druckteil (46) eine Fläche hat, die kleiner ist als die erste Elektrode (56e) und die zweite Elektrode (57e).

## Revendications

1. Capteur de détection de charge (5) comprenant :
une feuille de capteur (50) comprenant une première feuille isolante (56s) constituée de résine et une seconde feuille isolante (57s) constituée de résine, la première feuille isolante (56s) et la seconde feuille isolante (57s) se faisant face, une première électrode (56e) disposée sur une face de la première feuille isolante (56s), la face faisant face à la seconde feuille isolante (57s), et une seconde électrode (57e) disposée entre la première feuille isolante (56s) et la seconde feuille isolante (57s) et appariée avec la première électrode (56e) ; et
une plaque métallique (60) disposée sur une face de la seconde feuille isolante (57s), la face étant opposée à une face faisant face à la première feuille isolante (56s), au moins dans une partie chevauchant la première électrode (56e) et la seconde électrode (57e),
**caractérisé par**
une couche adhésive (70) qui est disposée entre la seconde feuille isolante (57s) et la plaque métallique (60) et lie ensemble la seconde feuille isolante (57s) et la plaque métallique (60), et
en ce qu'une épaisseur totale d'une épaisseur (T1) de la seconde feuille isolante (57s) et d'une épaisseur (T3) de la couche adhésive (70) est inférieure à une épaisseur (T2) de la plaque métallique (60).

2. Capteur de détection de charge (5) selon la revendication 1, dans lequel l'épaisseur (T3) de la couche adhésive (70) est égale ou supérieure à 10 µm et égale ou inférieure à 0,8 fois l'épaisseur (T1) de la seconde feuille isolante (57s).

3. Capteur de détection de charge (5) selon l'une quelconque des revendications 1 à 2, dans lequel l'épaisseur (T1) de la seconde feuille isolante (57e) se situe dans une plage de 10 % à 75 % de l'épaisseur (T2) de la plaque métallique (60).

4. Capteur de détection de charge (5) selon l'une quelconque des revendications 1 à 3, dans lequel l'épaisseur (T1) de la seconde feuille isolante (57s) est inférieure à une épaisseur (T4) de la première feuille isolante (56s).

5. Capteur de détection de charge (5) selon l'une quelconque des revendications 1 à 4, comprenant en outre un élément d'espacement (58) disposé entre la première feuille isolante (56s) et la seconde feuille isolante (57s), dans lequel
un module d'élasticité de l'élément d'espacement (58) dans un environnement de température de 85°C est égal ou supérieur à 10 MPa.

6. Capteur de détection de charge (5) selon l'une quelconque des revendications 1 à 4, comprenant en outre un élément d'espacement (58) comprenant une feuille isolante (101) disposée entre la première feuille isolante (56s) et la seconde feuille isolante (57s), une première couche adhésive (102) qui lie ensemble la feuille isolante (101) et la première feuille isolante (56s), et une seconde couche adhésive (103) qui lie ensemble la feuille isolante (101) et la seconde feuille isolante (57s), dans lequel un module d'élasticité de la première couche adhésive (102) et un module d'élasticité de la seconde couche adhésive (103) dans un environnement de température de 85°C sont égaux ou supérieurs à 10 MPa.

7. Unité de capteur de détection de charge (1a) comprenant :
le capteur de détection de charge (5) selon l'une quelconque des revendications 1 à 6 ; et
un élément de pression (4) disposé sur la plaque métallique (60) sur un côté opposé à la feuille de capteur (50), l'élément de pression (4) comprenant une partie de pression (46, 146) pour presser la plaque métallique (60).

8. Unité de capteur de détection de charge (1a) selon la revendication 7, dans laquelle l'élément de pression (4) comprend une paroi supérieure (45) disposée pour recevoir la pression provenant d'un coussin de siège (SC), la paroi supérieure (45) ayant une surface plus grande qu'une surface de contact de la partie de pression (46) avec la plaque métallique (60).

9. Unité de capteur de détection de charge (1a) selon la revendication 8, dans laquelle la paroi supérieure (45) a une surface plus grande que la première électrode (56e) et la seconde électrode (57e), et
la partie de pression (46) a une surface plus petite que la première électrode (56e) et la seconde électrode (57e).
